# EUROPEAN PATENT APPLICATION

(11) **EP 1 147 877 A2**
(43) Date of publication of application: **24.10.2001**
(21) Application number: 00309777.1
(22) Date of filing: 03.11.2000
(51) Int. Cl.: B29C 55/28, B29C 55/30, B32B 27/32, B29C 47/00

(54) **Production of stretch plastic film**

(30) Priority: 17.04.2000 US 551989
(71) Applicant: Macro Engineering & Technology Inc., Mississauga, Ontario L4Z 2E5 (CA)
(72) Inventor: Planeta, Mirek, Mississauga, Ontario L4Z 2E5 (CA); Tamber, Harinder, Mississauga, Ontario L5G 1W9 (CA); Lam, Herbert, Richmond Hill, Ontario L4B 3S3 (CA)
(74) Representative: Walker, Antony James Alexander

(57) **Abstract**

A method of producing stretch plastic film includes extruding suitable plastic material from an annular die (2) as a tubular film (4), and forming the extruded film into a bubble with air entrapped therein by simultaneously collapsing and bonding the tubular film bubble at a predetermined distance from the annular die (2). The temperature of the tubular film (4) when collapsed is sufficiently high to cause opposite sides of the collapsed film to become bonded together and form a single layer stretch plastic film, which may be subsequently stretched to reduce its thickness.

## Description

This invention relates to the production of stretch plastic film.

Stretch plastic film, commonly known as stretch wrap, has gained substantial acceptance for such uses as warehouse packaging applications where plastic film is stretched around pallets, containers or irregular loads and allowing the built-in elastic recovery properties of the film to constrain the surrounded item(s). A number of plastic materials, such as PVC, LLDPE, LDPE and PE copolymerized with other suitable compounds such as vinyl acetate, acrylic acid or methacrylic acid, are used to produce stretch film for commercial use, with the usual thickness of such film being from about 18 to 30 microns.

The properties of the stretch film obtained are dependent upon a large number of variables, such as the extrusion process, film thickness, monolayer or co-extruded multilayer film, cooling rate, blow up ratio and stretch ratio. Currently, extensive research work is being carried out in industrial laboratories to improve the properties of stretch film, such as balance of peel/lap cling, tensile strength, tear resistance, transparency, etc..

Most stretch films are produced by a cast film process. However, a cast film process has inherent disadvantages in the production of stretch film. In the cast film process, orientation is effective only in the machine direction with consequent weakness in tensile strength. Also, due to inherent nature of the cast film process, edge trimming is essential. This usually results in kinks in the edges, thereby rendering the film vulnerable to tear. Tensile strength and tear properties can be improved by using a blown film process rather than a cast film process.

It is therefore an object of the invention to provide a suitable method for producing a stretch film by means of a blown film process.

According to the invention, a stretch plastic film comprises a collapsed tubular film of suitable plastic material with opposite sides of the collapsed film being bonded together.

Stretch film produced in accordance with the invention does not have edge kinks and also has improved tear resistance compared to cast stretch film. Also, it has been found that tensile strength and elasticity may be improved by up to about 30% in stretch film produced in accordance with the invention compared to film produced by a blown film process where the tubular film is twice the thickness of the tubular film produced in accordance with the present invention and is slit to provide a single layer film. This is probably due to the higher orientation of the film produced in accordance with the present invention because of a higher draw down ratio and higher surface tension for thinner gauge films.

Stretch film in accordance with the invention also resists tearing by sharp objects, and even if one part of the single layer film corresponding to one side of the bubble starts tearing because of a defect, the other part corresponding to the other side of the bubble is resistant to such tearing. Also, if there is any irregularity in one side of the bubble, the other side of the bubble in the resultant single layer film will take the stress, resulting in less breakage of the film. Further, a stretch film in accordance with the invention exhibits higher elasticity because of its orientation compared to a stretch film produced by a cast process.

The thickness of the tubular film before collapse may be in the range of from about 5 to 15 microns so as to provide the single layer bonded film with a thickness in the range of from about 10 to about 30 microns.

The plastic material may be polyolefin material, which may also contain polyisobutylene to improve its cling properties. The plastic material may be selected from the group consisting of LLDPE, mLLDPE, mPE, copolymers thereof and blends thereof.

The stretch plastic film may be formed by extruding suitable plastic material from an annular die as a tubular film, forming the extruded film into a bubble with air entrapped therein by collapsing the tubular film at a predetermined distance from the annular die, and causing the temperature of the tubular film when collapsed to be sufficiently high to cause opposite sides of the collapsed film to become bonded together to form a single layer of film.

The present invention also provides a method of producing stretched plastic film including extruding suitable plastic material from an annular die as a tubular film, forming the extruded film into a bubble with air entrapped therein by collapsing the tubular film bubble at a predetermined distance from the annular die, and causing the temperature of the tubular film when collapsed to be sufficiently high to cause opposite sides of the collapsed film to become bonded together and form a single layer of stretched plastic film.

The predetermined distance between the annular die and the collapse of the tubular film in the range of from about 10 to about 35 feet, and the blow-up ratio may be in the range of from about 1.2:1 to about 5:1. The tubular film bubble may be cooled by ambient or cooled external air and/or by air within the bubble.

The single layer stretch plastic film may be stretched to reduce its thickness. The stretching may be effected by passing the film between a pair of driven stretch rolls rotated at a faster peripheral speed than the speed of the blocked two layer film at said predetermined distance from the annular die. The film may be passed successively through a plurality of pairs of driven stretch/nip rolls, each subsequent pair of stretch rolls being driven at a faster peripheral speed than the previous pair of stretch/nip rolls.

The film may be stretched by an amount in the range of from about 100% to about 400%. The film may have a thickness in the range from about 20 to about 50 microns and may be stretched to a thickness in the range of from about 10 to about 25 microns.

Embodiments of the present invention will now be described, by way of example, with reference to the accompanying drawings, in which:
Fig. 1 is a diagrammatic view of a method of producing a single layer stretch plastic film in accordance with one embodiment of the invention;
Fig. 2 is a cross-sectional view taken along the line 2-2 of Fig. 1 of single layer stretch plastic film in accordance with the invention;
Fig. 3 is a similar view showing how the single layer stretch plastic film of Fig. 2 can be cut along its central longitudinal axis to produce two stretched plastic films each having half the width of the original film, and
Fig. 4 is a similar view showing how the opposite side edge portions of the single layer stretch plastic film of fig. 2 can be removed; and
Fig. 5 is a diagrammatic view of a method of producing a single layer stretch plastic film in accordance with another embodiment of the invention.

The stretch film may comprise polyethylene and 4 wt% polyisobutylene or LLDPE without any additives. The polyolefin material contains no slip or antiblock additives. Polyisobutylene (PIB) may be used as a cling additive. Polyisobutylene is an elastomer polymer based on aliphatic olefins. Depending on its molecular weight, PIB is partially incompatible with polyethylene for high molecular weight fractions and compatible for low molecular weight components. PIB may be added by a gear pump into the feed throat of the extruder or may be added in a pre-compounded polyethylene concentrate or by directly injecting it into the extruder. A disadvantage of a precompounded master batch is that it sticks to the feedthroat, resulting in inconsistent feed and hence surging during processing.

The bubble may be collapsed at a tower height of 10 to 35 feet in order to block the film, i.e. cause opposite sides of the collapsed film to become bonded together. Blow up ratios from 1.2:1 to 5:1 may be used. A blow up ratio of 2.5:1 is preferable for down gauging the film to 5 microns and hence giving a finished blocked film with a thickness of 10 microns.

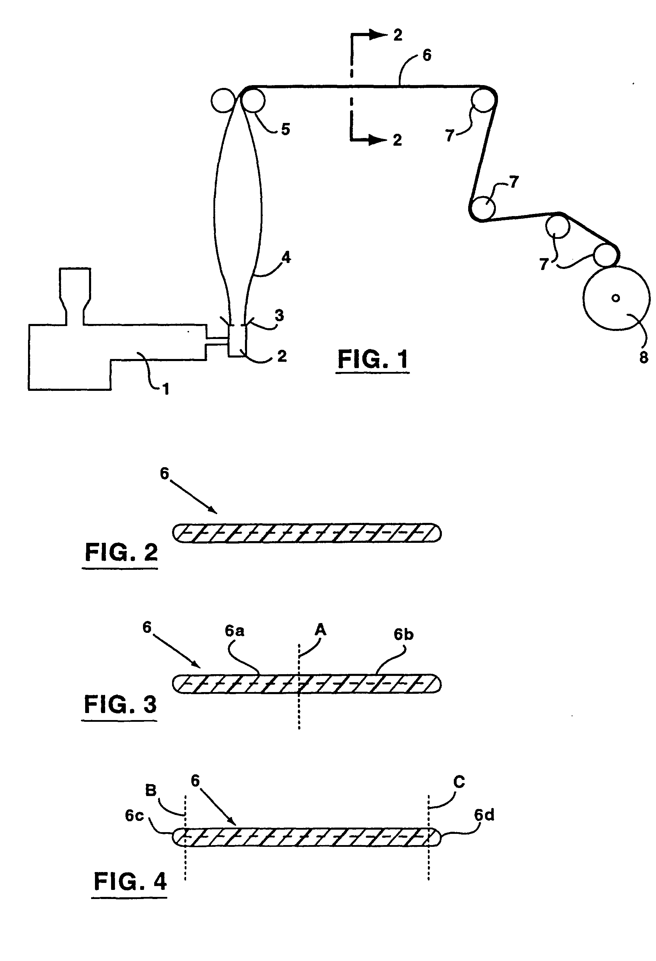

Referring first to Figs. 1 and 2 of the drawings, a tubular single layer stretch plastic film 4 is extruded by an extruder 1 through an annular die 2 and is cooled by an air ring 3. Air is enclosed in the bubble between the die 2 and a pair of pinch rolls 5. The pinch rolls 5 collapse the tubular film bubble, and the temperature of the film bubble when being collapsed is sufficiently high to cause opposite sides of the film bubble to become bonded together, i.e. blocked by the pinch rolls 5, to form a single layer stretch plastic film 6. A collapsing frame (not shown) may be provided below pinch rolls 5 in known manner. The amount of air in the bubble 4 is varied to obtain different blow up ratios, and the speed of the pinch rolls 5 is varied to obtain different stretch ratios. The resultant single layer stretch plastic film 6 is passed over idler rolls 7 and wound onto a surface winder 8.

The single layer stretch plastic film 6 is of full width, as shown in Fig. 2. As shown in Fig. 3, the film 6 may be cut along its central longitudinal axis A to form two single layer strips plastic film 6a, 6b each having half the width of the original film 6.

As shown in Fig. 4, opposite side edge portions 6c, 6d of the film 6 may be removed by cutting along lines B and C. If desired, the film 6 may be cut longitudinally into two or more strips.

Specific examples of this embodiment of the invention will now be described.

### EXAMPLE 1

A copolymer, mPE, made by EXXON Chemical Co., under the trade name Exceed 3028, with a melting point of 92°C, a vicat softening point of 80°C, density of 0.9 g/cc. melt index of 1.2 and a melt temperature of 210°C was used in this example. This material is characterized by a narrow molecular weight distribution and composition distribution.

Polyisobutylene (PIB), made by Amoco Chemical Co., under the trade name H-100, with an average molecular weight of 920, density 0.883 g/cc, viscosity CS at 99°C of 196-233 and specific gravity at 15.6°C of 0.8899, was added. The PIB (4 wt%) was added via a gear pump through the feed throat of the extruder 1.

The film extruded from extruder 2 was rapidly cooled by ambient air at 25°C by the air ring 3 and air was injected into the bubble to biaxially stretch the film 4 four times lengthwise and three times breadthwise simultaneously between the die 2 and the pinch rolls 5. The bubble was collapsed and blocked while warm (60°C) at a nip height of 10 feet by the pinch rolls 5. After passing the block film 6 over idler rollers 7, it was wound on surface winder 8. The finished biaxially oriented stretch film 6 had a width of 12 inches and a thickness of 15 microns.

### EXAMPLE 2

Stretch film was produced in the same manner as in Example 1 except that the polyolefin was LLDPE. The polymer was produced by Dow Chemical Co., under the trade name DOWLEX 2267A with a vicat softening point of 98°C, density 0.91 d/cc, a melt index of 0.85 and no slip or antiblock additives. The biaxially oriented stretch film which was produced had a width of 18 inches and a thickness of 20 microns.

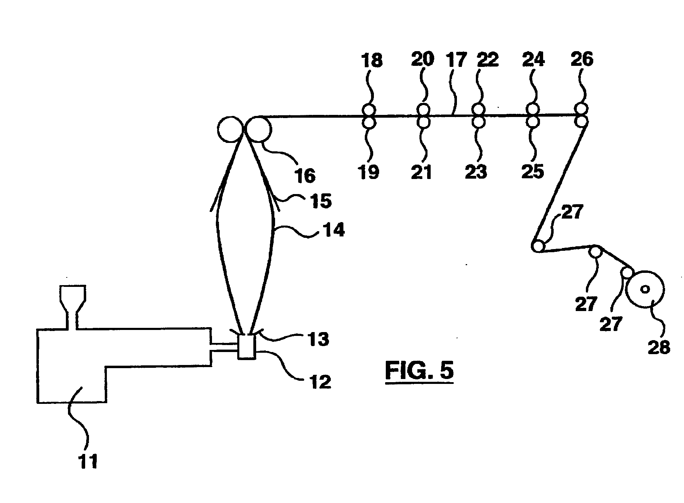

Fig. 5 shows another embodiment of the invention in which the single stretch plastic film is stretched.

As shown in Fig. 5, a tubular film 14 of suitable plastic material is extruded by an extruder through an annular die 12 and is rapidly cooled to room temperature by an air ring 13. The film extruded from the annular die 12 proceeds as a bubble 14 in known manner to a collapsing frame 15 and pinch rolls 16. The amount of air in the bubble 14 can be varied to obtain different blow-up ratios, and the speed of the pinch rolls 15 can be varied to obtain different stretch ratios. The collapsing frame 15 collapse the bubble 14, and the temperature of the film bubble 14 when collapsed is sufficiently high to cause opposite sides of the bubble 14 to become bonded together, i.e. blocked, and form a blocked two layer film 17.

The blocked two layer film 17 is then passed through four pairs of stretch/nip rolls 18-19, 20-21, 22-23 and 24-25. The speed of each pair is independently controlled, with the peripheral speed of the first pair being faster than the peripheral speed of the pinch rolls 16, and the speed of successive pairs being faster than the speed of the previous pair in order to stretch the film 17 by an amount in the range of from about 100 to 400%. The final stretch film 17 passes through another pair of nip rolls 26, then over idler rolls 27 and onto a winder 28.

Specific examples of this embodiment of the invention will now be described.

### EXAMPLE 3

A copolymer, mPE, made by EXXON Chemical Co., under the trade name Exceed 3028, with a melting point of 92°C, a vicat softening point of 80°C, a density of 0.9 g/cc, and a melt index of 1.2 was used in this example. PIB made by Amoco Chemical Co., under the trade name H-100 with an average molecular weight of 920, a density of 0.883 g/cc, a viscosity CS ad 99°C of 196-233 and a specific gravity at 15.6°C of 0.8899 was added. The PIB (4% wt) was added via a gear pump through the feed throat of extruder 11.

The film extruded from annular die 12 was rapidly cooled by ambient air at 25°C from an air ring 13, with air being injected into the bubble 14 in known manner at a pressure to biaxially stretch the film four times lengthwise and three times breadthwise simultaneously between the die 12 and the pinch rolls 15. The bubble 14 was collapsed and blocked while warm (60°C) at a nip height of 10 feet by the pinch rolls 15. The film was stretched 200% by the stretch/nip rolls 18-19, 20-21, 22-23 and 24-25 and, after passing through nip rolls 26 and over idler rollers 27, it was wound on surface winder 28. The finished biaxially oriented stretch film had a width of 12 inches and thickness of 10 microns.

### EXAMPLE 4

Stretch plastic film was produced in the same manner as in Example 3 except that the polyolefin was LLDPE. This polymer was obtained from Dow Chemical Co., under the trade name DOWLEX 2267A with a vicat softening point of 98°C, a density of 0.917 d/cc and a melt index of 0.85, there being no slip or antiblock additives. The final biaxially oriented stretch film had a width of 18 inches and a thickness of 15 microns.

Other embodiments and examples of the invention will be readily apparent from the forgoing description, the scope of the invention being defined in the appended claims.

## Claims

1. A method of producing stretch plastic film including:
extruding suitable plastic material from an annular die as a tubular film,
forming the extruded film into a bubble with air entrapped therein by simultaneously collapsing and bonding the tubular film bubble at a predetermined distance from the annular die,
wherein the temperature of the tubular film when collapsed is sufficiently high to cause opposite sides of the collapsed film to become boned together and form a single layer stretch plastic film.

2. A method according to claim 1, wherein the predetermined distance between the annular die and the collapse of the tubular film is in the range of from about 10 to about 35 feet.

3. A method according to claim 1 or 2, wherein the blow-up ratio is in the range of from about 1.2:1 to about 5:1.

4. A method according to claim 1, 2 or 3, wherein the tubular film bubble is cooled by ambient or cooled external air.

5. A method according to claim 1, 2 or 3, wherein the tubular film bubble is cooled by air within the bubble.

6. A method according to any preceding claim, wherein the thickness of the tubular film before collapse is in the range of from about 5 to 15 microns, so as to provide the single layer bonded film with a thickness in the range of from about 10 to about 30 microns.

7. A method according to any preceding claim, wherein the plastic material is polyolefin material.

8. A method according to claim 7, wherein the polyolefin material also contains polyisobutylene to improve its cling properties.

9. A method according to any of claims 1 to 6, wherein the plastic material is selected from the group consisting of LLDPE, mLLDPE, mPE and blends thereof.

10. A method according to claim 9, wherein the plastic material contains polyisobutylene to improve its cling properties.

11. A method according to any preceding claim, wherein the single layer stretched plastic film is cut longitudinally into two or more strips.

12. A method according to any precdding claim, wherein opposite side edge portions of the single layer stretched plastic film are removed.

13. A method according to any preceding claim, wherein the single layer stretch plastic film is stretched to reduce its thickness.

14. A method according to claim 13, wherein said stretching is effected by passing the film between a pair of driven stretch rolls rotated at a faster peripheral speed than the speed of the blocked two layer film at said predetermined distance from the annular die.

15. A method according to claim 14, wherein the film is passed successively through a plurality of pairs of driven stretch/nip rolls, each subsequent pair of stretch rolls being driven at a faster peripheral speed than the previous pair of stretch/nip rolls.

16. A method according to claim 13, wherein the film is stretched by an amount in the range of from about 100 to about 400%.

17. A method according to claim 13, wherein the film has a thickness in the range of from about 20 to about 50 microns and is stretched to a thickness in the range of from about 10 to about 2.5 microns.
